(19) Europäisches Patentamt
European Patent Office
Office européen des brevets

(11) **EP 0 876 595 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.[7]: **G01N 21/47**, G02B 6/12

(21) Anmeldenummer: **97914096.9**

(22) Anmeldetag: **23.01.1997**

(86) Internationale Anmeldenummer:
**PCT/DE97/00167**

(87) Internationale Veröffentlichungsnummer:
**WO 97/027468 (31.07.1997 Gazette 1997/33)**

(54) **NIEDERKOHÄRENZ-INTERFEROMETRISCHES GERÄT**

LOW-COHERENCE INTERFEROMETRIC DEVICE

APPAREIL INTERFEROMETRIQUE DE FAIBLE COHERENCE

(84) Benannte Vertragsstaaten:
**DE FR GB**

(30) Priorität: **26.01.1996 DE 19602785**

(43) Veröffentlichungstag der Anmeldung:
**11.11.1998 Patentblatt 1998/46**

(73) Patentinhaber: **Roche Diagnostics GmbH**
**68298 Mannheim (DE)**

(72) Erfinder:
• **KNÜTTEL, Alexander**
**D-69488 Birkenau (DE)**
• **BOECKER, Dirk**
**D-69115 Heidelberg (DE)**

(74) Vertreter: **Pfeifer, Hans-Peter, Dr. et al**
**Patentanwälte**
**Dr. H.-P. Pfeifer Dr. P. Jany**
**Beiertheimer Allee 19**
**76137 Karlsruhe (DE)**

(56) Entgegenhaltungen:
**WO-A-92/19930          DE-C- 4 204 521**

• **JOURNAL OF LIGHTWAVE TECHNOLOGY, Bd. 6, Nr. 3, März 1988, NEW YORT,NY,US, Seiten 392-398, XP002034036 A.A.M.SALEH ET AL.: "Reflective Single-Mode Fiber-Optic Passive Star Couplers"**
• **JOURNAL OF LIGHTWAVE TECHNOLOGY., Bd. 6, Nr. 1, Januar 1988, NEW YORK US, Seiten 41-46, XP002034037 A.HIMENO ET AL.: "Loss Measurement and Analysis of High-Silica Reflection Bending Optical Waveguides"**

**Beschreibung**

Die Erfindung betrifft ein Niederkohärenz-interferometrisches Gerät zur Untersuchung, insbesondere zur mehrdimensionalen Bilddarstellung einer Probe und insbesondere für medizinische Zwecke.

Niederkohärenz-Interferometrie-Verfahren werden für unterschiedliche Anwendungszwecke eingesetzt. Sie werden in der Fachwelt meist als LCI (Low Coherence Interferometry)-Verfahren oder auch als OCDR (Optical Coherence Domain Reflectometry) bezeichnet. Nachfolgend wird einfachheitshalber die Abkürzung LCI verwendet.

LCI-Verfahren werden für verschiedene Anwendungszwecke verwendet oder zumindest diskutiert. Beispielsweise kann auf folgende Zitate verwiesen werden:

> 1) Danielson et al: "Guide-wave reflectometry with micrometer resolution", Applied Optics, 26 (1987), 2836-2842
> 2) Schmitt et al: "Measurement of Optical Properties of Biological Tissues by Low-Coherence Reflectometry", Applied Optics, 32 (1993), 6032-6042
> 3) WO 95/30368
> 4) DE 2528209 A
> 5) DE 3201801 A1
> 6) WO 92/19930
> 7) DE 4204521C1
> 8) US 5,073,024

Gemeinsam ist allen LCI-Verfahren, daß Licht einer niederkohärenten (spektral breitbandig emittierenden) Lichtquelle in zwei Teilstrahlen, nämlich einen Meßlichtstrahl und einem Referenzlichtstrahl, aufgeteilt wird und die beiden Teilstrahlen vor einem Detektor derartig wieder zusammengeführt werden, daß ein Interferenzsignal entsteht, welches die gewünschten Informationen enthält. Kernelement der Niederkohärenz-interferometrischen Geräte (nachfolgend: "LCI-Geräte") ist eine Interferometer-Anordnung, welche neben der niederkohärenten Lichtquelle einen optischen Koppler, einen Referenzreflektor, einen Einstrahlungskopf mit einer Lichtaustrittsöffnung zum Einstrahlen von Licht in die Probe und den Detektor umfaßt.

Die Lichtwege zwischen diesen Elementen der Interferometer-Anordnung bilden sogenannte Interferometerarme, wobei das Licht der Lichtquelle durch den Lichtquellenarm zu dem optischen Koppler gelangt, dort aufgeteilt wird und einerseits als Meßlicht über einen Probenarm und den Einstrahlungskopf in die Probe eingestrahlt wird, während ein zweiter Lichtanteil als Referenzlicht über einen Reflektorarm zu dem Referenzreflektor gelangt. Beide Lichtanteile werden reflektiert (das Meßlicht in der Probe, das Referenzlicht an dem Referenzreflektor) und werden auf dem gleichen Lichtweg (Probenarm bzw. Referenzarm) zu dem optischen Koppler zurückgeführt, von diesem zusammengefaßt und über den Detektorarm dem Detektor zugeführt, an dessen lichtempfindlicher Oberfläche infolge der Interferenz der beiden Teilstrahlen ein Interferenzsignal meßbar ist.

Voraussetzung für die Interferenz ist, daß sich die optische Lichtweglänge in dem Referenzarm (von dem optischen Koppler bis zu dem Referenzreflektor) maximal um die Kohärenzlänge der Lichtquelle von der optischen Weglänge des Meßlichts zwischen dem optischen Koppler und dem Reflexionspunkt in der Probe unterscheidet. Nur wenn diese Bedingung erfüllt ist, wird ein Interferenzsignal gemessen. Dies wird benutzt, um die Untersuchung durch entsprechende Einstellung der Relation der Längen des Referenzarmes und des Probenarms auf eine ganz bestimmte Meßtiefe zu beschränken, die nachfolgend als LCI-Meßtiefe bezeichnet wird.

Diese Grundprinzipien der LCI-Meßtechnik werden hinsichtlich meßtechnischer Einzelheiten und hinsichtlich der Auswertung des Interferenzsignals variiert, um unterschiedliche Anwendungen zu ermöglichen.

Beispielsweise geht es bei dem Zitat 1) um die Untersuchung der Struktur von Lichtleitfasern, insbesondere um optische Fehler lokalisieren zu können. Die Zitate 2) und 3) befassen sich unter unterschiedlichen Gesichtspunkten mit der Untersuchung biologischer Gewebe (insbesondere Hautgewebe). Da es den Autoren nur darum geht, eine Information in Abhängigkeit von der durch die Interferenzbedingung definierten LCI-Meßtiefe zu erhalten, wird bei diesen Publikationen eine reine Tiefenabtastung (englisch: "depth scan" oder "longitudinal scan") durchgeführt, d.h. die Länge des Referenzarmes zur Einstellung der LCI-Meßtiefe variiert.

Die Zitate 4) bis 6) beschreiben hingegen Verfahren und Vorrichtungen, bei denen eine zusätzliche laterale Abtastung (lateral scan) durchgeführt wird, um auf unterschiedliche Weise ein Bild über die Verteilung der gewünschten Information in lateraler Richtung (parallel zur Oberfläche der Probe) zu erhalten. Bei solchen Verfahren geht es also um eine mehrdimensionale Bilddarstellung, wobei neben der Tiefenabtastung eine Abtastung in mindestens einer lateralen Dimension ("lateral scan") erfolgt. Die Erfindung richtet sich insbesondere auf Vorrichtungen und Verfahren für eine mehrdimensionale Bilddarstellung mit Hilfe des LCI-Prinzips (Optical Coherence Tomography (OTC)).

Mit OTC-Verfahren befassen sich die Zitate 4) bis 6). In Zitat 4) geht es dabei um die Oberflächenabtastung eines Werkstücks und in Zitat 5) um die Untersuchung des Auges, insbesondere der Netzhaut (Retina). In Zitat 6) werden besonders detaillierte Erläuterungen zur mehrdimensionalen Bilddarstellung einer Probe mit Hilfe der LCI-Meßtechnik gegeben, wobei das Anwendungsgebiet insbesondere - wie bei der vorliegenden Erfindung - die Untersuchung biologischer Proben ist. Als wichtigstes, praktisches Beispiel wird in Zitat 6) die Untersuchung des Auges (wie bei Zitat 5)) diskutiert. Die vorliegende Erfindung richtet sich vor allem auf die Untersuchung von Proben mit sehr fein verteilten Strukturen, insbesondere die menschliche Haut.

Das OTC-Verfahren hat gegenüber anderen bildgebenden Verfahren (beispielsweise Ultraschall-Imaging, Röntgen-CT sowie lateral abtastenden konfokalen Mikroskopen (scanning confocal microscopes)) besondere Vorteile, weil es einerseits keine ionisierenden Strahlen verwendet und deswegen unschädlich ist und andererseits eine hohe Auflösung der Bilddarstellung erlaubt. Es ist insbesondere für die Untersuchung Oberflächen-naher relativ feiner Strukturen geeignet, wobei im Falle der Haut die maximale LCI-Meßtiefe nach dem gegenwärtigen Stand der Entwicklung bei etwa 1,5 mm liegt. Es ist eine räumliche Auflösung kleiner als 10 μm (sowohl axial als auch lateral) möglich.

Die aus den Zitaten 1) bis 6) bekannten Verfahren sind konstruktiv aufwendig und haben einen hohen Raumbedarf im Bereich des Meßkopfes. Deswegen wurden LCI-Geräte vorgeschlagen, bei denen Teile der Interferometer-Anordnung, zumindest der optische Koppler und der Referenzarm, gemeinsam in einem optischen Chip integriert sind (Zitate 7) und 8)).

Ein optischer Chip ist ein optisches Element aus einem transparenten Material (in der Regel Glas), in welchem Lichtwellenleiter integriert sind. Die Lichtwellenleiter bestehen aus einem Material mit im Vergleich zu dem übrigen optischen Chip erhöhten Brechungsindex. Ebenso wie bei Lichtleitfasern resultiert die Lichtleitfunktion der in dem optischen Chip integrierten Lichtwellenleiter aus der Totalreflexion an der Brechungsindex-Stufe. Optische Chips, die auch als "integrated optical components" bezeichnet werden, werden vor allem für die optische Datenübertragung mit faseroptischen Kommunikationssystemen verwendet. Nähere Einzelheiten können einschlägigen Publikationen entnommen werden, wie beispielsweise "Optical waveguides advance to meet fiberoptic demands" von E. D. Jungbluth, Laser Focus World, April 1994, 99-104 oder dem Band "Integrated Optics", Proceedings of the Third European Conference, ECIO'85, H.-P. Noltes, R. Ulrich (Editors); Springer Verlag 1985, in der auf Seite 26 bis 28 ein Artikel von P.O. Andersson et. al., "Fiber Optic Mach-Zehnder Interferometer Based on Lithium Niobate Components" veröffentlicht ist.

Der Meßarm einer Interferometer-Anordnung schließt stets einen Teilabschnitt ein, der außerhalb des Chip verläuft, nämlich den Lichtweg von der Lichtaustrittsöffnung des Chip bis zu dem Reflexionspunkt in der Probe. Der vollständig in den Chip integrierte Referenzarm ist deswegen erheblich länger als der in dem Chip verlaufende Teilabschnitt des Meßarmes. Da beide Arme von dem gleichen optischen Koppler ausgehen, kann der Referenzarm in dem optischen Chip nicht gerade verlaufen. Es ist mindestens eine Strahlumlenkung erforderlich, um durch einen zickzack- oder serpentinenförmigen Verlauf des Referenzarms dessen zusätzliche Länge in dem optischen Chip unterzubringen.

In dem Zitat 7) sind die beiden grundsätzlichen Möglichkeiten einer solchen Strahlumlenkung beschrieben. Zum einen kann ein meanderförmig gebogener Lichtwellenleiter für den Referenzarm verwendet werden. Zum zweiten kann zusätzlich zu dem am Ende des Referenzarmes angeordneten Referenzreflektors mindestens ein weiterer Reflektor ("Umlenkreflektor") vorgesehen sein, der das Referenzlicht von einem ersten Lichtwellenleiter in einen zweiten Lichtwellenleiter reflektiert, wobei die Lichtwellenleiter eine erste und eine zweite Teilstrecke des Referenzarmes bilden. Der Umlenkreflektor wird bei der bekannten Vorrichtung durch einen Schlitz in dem Wellenleiter gebildet, der durch reaktives Ionenätzen erzeugt wird. Da dieser Fertigungsschritt sehr aufwendig ist, wird die Verwendung eines Umlenkreflektors in der Publikation 7 als nachteilig bezeichnet und die reflektorfreie, kreisbogenförmige Umlenkung bevorzugt.

Hiervon ausgehend, d.h. von einem Gerät gemäß Oberbegriff des Anspruchs 1, ist die vorliegende Erfindung dadurch gekennzeichnet, daß der Umlenkreflektor an einer Endfläche des optischen Chip derartig ausgebildet ist, daß das Referenzlicht zwischen den beiden Lichtwellenleitern, übergekoppelt wird.

Die Erfindung erlaubt einen außerordentlich kompakten und einfachen Aufbau mehrerer dicht beieinander angeordneter Interferometer-Anordnungen. Dadurch ist eine mehrkanalige Untersuchung der Probe möglich, bei der das Meßlicht an mehreren dicht benachbarten Eintrittsorten der Grenzfläche in die Probe eingestrahlt wird. Infolgedessen wird die für eine Bilderzeugung mit einer bestimmten gewünschten Auflösung erforderliche Integrationszeit vermindert bzw. bei gegebener Integrationszeit eine Verbesserung der räumlichen (lateralen und/oder longitudinalen) optischen Auflösung erreicht.

Ein Reflektor an der Endfläche eines optischen Chip ist einfach herzustellen. Grundsätzlich kann irgendein Material, welches einen von den Lichtwellenleitern abweichenden Brechungsindex hat, auf die Grenzfläche aufgebracht werden, um durch eine unstetige Brechungsindexänderung eine Reflexion zu bewirken. Aus Intensitätsgründen ist jedoch eine metallische Verspiegelung bevorzugt.

Für die Funktion der Interferometer-Anordnung ist es erforderlich, daß das Licht zwischen den beiden Lichtwellenleitern übergekoppelt wird, d.h. das aus einem der Lichtwellenleiter auf die reflektierende Fläche auftreffende Licht praktisch vollständig (zu mindestens etwa 90%) in den anderen Lichtwellenleiter eintritt und nicht in den gleichen Lichtwellenleiter zurückreflektiert wird.

Um diese Überkopplung sicherzustellen, werden im Rahmen der Erfindung unterschiedliche Anordnungen vorgeschlagen.

Zum einen kann die Überkopplung dadurch erreicht werden, daß die beiden Lichtwellenleiter unter einem (gleichen) spitzen Winkel auf den Umlenkreflektor auftreffen. Um störende Rückreflexion von Lichtanteilen in den gleichen Wellenleiter zu vermeiden, ist ein Mindestwinkel (beispielsweise etwa 5°) gegenüber der Flächennormalen des Umlenkreflektors erforderlich. Um dabei die Intensitätsverluste möglichst gering zu halten, muß der Umlenkreflektor mit sehr hoher Präzision am Kreuzungspunkt der beiden Lichtwellenleiter lokalisiert ist. Verfahren, um dies zu gewährleisten, werden weiter unten beschrieben.

Gemäß einer zweiten Konstruktion wird die vollständige Überkopplung des Referenzstrahls von dem ersten Lichtwellenleiter in den zweiten Lichtwellenleiter dadurch erreicht, daß beide Wellenleiter unmittelbar vor dem Umlenkreflektor über eine Kopplungslänge L in einer Lichtkoppleranordnung parallel verlaufen, wobei die Kopplungslänge L so gemessen ist, daß Überkopplung stattfindet. Dabei wird ein im Zusammenhang mit Lichtkopplern bekanntes Phänomen benutzt, welches in der Publikation

> 9) K.J. Ebeling: "Integrierte Optoelektronik"; Springer-Verlag 1992, zweite Auflage, Seite 146-151

beschrieben ist. Zwei Lichtwellenleiter befinden sich in Koppleranordnung, wenn sie in einem so engen Abstand parallel verlaufen, da sie durch das wechselseitige Eindringen evanescenter Wellen gekoppelt sind. Dabei wird bei einer bestimmten Kopplungslänge $L_c$ eine vollständige Überkopplung (cross-coupling) oder Umschaltung (switching over) der Lichtintensität der Eingangssignale beobachtet ("Kreuzzustand"), während für andere Längen mehr oder weniger große Lichtanteile in dem gleichen Lichtwellenleiter weiterlaufen ("Gleichzustand"). Dies wird weiter unten noch näher erläutert.

Insgesamt ermöglicht die Erfindung die Realisierung von Interferometer-Anordnungen in optischen Chips mit verhältnismäßig geringem Herstellungsaufwand und in einer sehr raumsparenden Anordnung. Dabei können die mit der Anordnung des Umlenkreflektors an einer Endfläche des optischen Chips verbundenen technologischen Probleme in einer Weise überwunden werden, die eine kostengünstige Fertigung erlaubt.

Zur Tiefenabtastung der Probe wird der Abstand des Einstrahlungskopfes zu der Grenzfläche der Probe variiert. Dabei ist es günstig, wenn das in die Probe eindringende Licht mit Hilfe eines zwischen dem Meßkopf und der Grenzfläche der Probe angeordneten optischen Systems fokussiert wird, wobei der Abstand des Brennpunktes (Fokus) innerhalb der Probe von der Grenzfläche, der nachfolgend als "Fokustiefe" bezeichnet wird, mit der LCI-Meßtiefe übereinstimmt.

Dabei besteht das Problem, daß sich die Fokustiefe und die LCI-Meßtiefe bei Änderung des Abstands zwischen dem Einstrahlungskopf und der Grenzfläche in unterschiedlicher Weise ändern. Wenn die Probe einen Brechungsindex N hat und der Einstrahlungskopf in Richtung auf die Probe um eine Länge z verschoben wird, verschiebt sich die LCI-Meßtiefe etwas weniger, nämlich um $z_i'=z/N$. Im Gegensatz dazu vergrößert sich bei der gleichen Verschiebung z des Einstrahlkopfes die Fokustiefe wegen der Lichtbrechung an der Grenzfläche näherungsweise um den Faktor N: $z_f'=z*N$.

Um trotz dieses Effekts im gesamten Längenabtastbereich eine Übereinstimmung der Fokustiefe und der LCI-Meßtiefe zu gewährleisten, sind gemäß einem im Anspruch 10 definierten Ausführungsbeispiel der Erfindung, Fokuskorrekturmittel vorgesehen, durch die gewährleistet wird, daß sich die Fokustiefe bei Änderung der LCI-Meßtiefe sich gleichförmig mit dieser ändert. Dadurch wird eine besonders gute optische Abbildungsqualität im gesamten Tiefenabtastbereich gewährleistet.

Der Erfindung wird im folgenden anhand von in den Figuren schematisch dargestellten Ausführungsbeispielen näher erläutert. Es zeigen:

Fig. 1 eine Prinzipdarstellung eines LCI-Reflektometers nach dem Stand der Technik,

Fig. 2 eine Schnittdarstellung des Abtastmoduls eines erfindungsgemäßen LCI-Reflektometers,

Fig. 3a den Wellenleiterplan einer ersten Ausführungsform des optischen Chip,

Fig. 3b einen Ausschnitt aus Fig. 3a in vergrößerter Darstellung,

Fig. 4 den Wellenleiterplan einer zweiten Ausführungsform des optischen Chip,

Fig. 5a den Wellenleiterplan einer dritten Ausführungsform des optischen Chip,

Fig. 5b einen Ausschnitt aus Fig. 5a in vergrößerter Darstellung,

Fig. 6 den Wellenleiterplan einer vierten Ausführungsform des optischen Chip,

Fig. 7 eine erste Ausführungsform eines optischen Systems mit einem erfindungsgemäßen Fokuskorrekturmittel,

Fig. 8 eine zweite Ausführungsform eines optischen Systems mit einem erfindungsgemäßen Fokuskorrekturmittel,

Fig. 9 eine Ausführungsform ähnlich Fig. 6, jedoch mit vergrößerter optischer Apertur,

Fig. 10 eine Ausschnittsdarstellung einer alternativen Ausführungsform zu Fig. 9,

Fig. 11 eine weitere Ausführungsform auf Basis von Fig. 8.

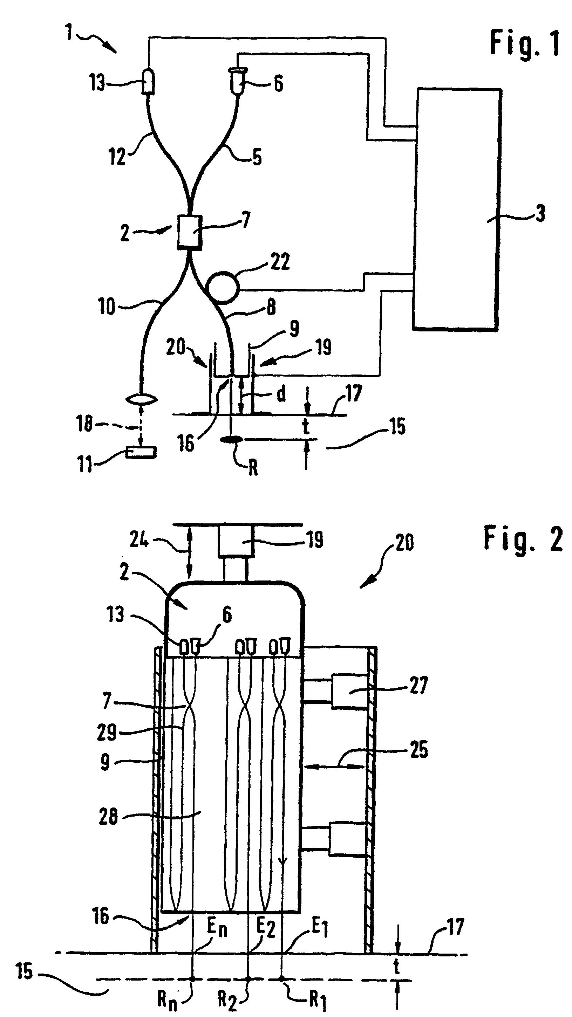

Das in Fig. 1 dargestellte LCI-Reflektometer 1 nach dem Stand der Technik besteht im wesentlichen aus einer Interferometer-Anordnung 2 und einer elektronischen Meß- und Auswerteeinheit 3. Die Interferometer-Anordnung 2 weist vier Interferometerarme auf, nämlich einen Lichtquellenarm 5 von einer Lichtquelle 6 zu einem optischen Koppler 7, einen Probenarm 8 zwischen dem optischen Koppler 7 und einem Einstrahlungskopf 9, einen Referenzarm 10 zwischen dem optischen Koppler 7 und einem Referenzreflektor 11 und einen Detektorarm 12 zwischen dem optischen koppler 7 und dem Detektor 13.

Wie erwähnt, ist Voraussetzung für das Auftreten von Interferenz, daß die optische Lichtweglänge des Meßlichts zwischen dem optischen Koppler 7 und einem in der Probe 15 in einer LCI-Meßtiefe t unterhalb der Grenzfläche 17 liegenden Reflexionspunkt R mit der optischen Lichtweglänge des Referenzlichts zwischen dem optischen Koppler 7 und der reflektierenden Oberfläche des Referenzreflektors 11 (innerhalb der Kohärenzlänge des Lichts) übereinstimmt. Wenn diese Interferenzbedingung erfüllt ist, mißt der Detektor ein Interferenzsignal, welches eine Information über die Probe in der Meßtiefe t enthält. Um das Interferenzsignal von Störeinflüssen zu separieren, wird häufig mit einer Phasenmodulation gearbeitet, wobei beispielsweise in dem Probenarm ein auf einen PZT (Piezo Transducer) 22 aufgewickelter Lichtwellenleiter vorgesehen sein kann, durch den die Lichtweglänge mit einer Modulationsfrequenz moduliert wird. Die Auswertung des Meßsignals des Detektors 6 erfolgt frequenzselektiv mit dieser Modulationsfrequenz.

Um eine Tiefenabtastung in der Probe 15 zu ermöglichen, muß entweder die Länge des Referenzarmes 10 zwischen dem optischen Koppler 7 und dem Referenzreflektor 11 oder der Abstand d zwischen der Lichtaustrittsöffnung 16 des Einstrahlungskopfes 9 und der Grenzfläche (Oberfläche) 17 der Probe 15 veränderlich sein. Die erstgenannte (bisher in der Praxis weit überwiegend verwendete) Möglichkeit ist in Fig. 1 durch einen gestrichelten Doppelpfeil 18 angedeutet. Bei der Erfindung wird der Abstand d des Meßkopfes 9 von der Probenoberfläche 17 variiert. Zur Einstellung des Abstands d dienen Positioniermittel 19, durch die die Position des Einstrahlungskopfes 9 bezüglich der Probe 15 in definierter und kontrollierter Weise eingestellt werden kann. Die Einheit aus dem Einstrahlungskopf 9 und den Positioniermitteln 19 bildet einen Abtastmodul 20.

Die Lichtquelle 6, der Detektor 13, der PZT 22 und die Positioniermittel 19 des Abtastmoduls 20 sind an die elektronische Meß- und Auswerteeinheit 3 angeschlossen, welche übliche Mittel zur Stromversorgung der Lichtquelle 6, zur Verarbeitung der Signale des Detektors 13 und zur Steuerung der Positioniervorrichtung 19 enthält.

Nähere Erläuterungen des LCI-Verfahrens einschließlich der Ermittlung unterschiedlicher Informationen über die Probe aus den Interferenzsignalen können den oben angegebenen Zitaten entnommen werden. Bei der vorliegenden Erfindung erfolgt die Verarbeitung und Auswertung der Meßsignale nach einem der bekannten Verfahren. Insoweit wird auf die Zitate 1) bis 8) Bezug genommen.

Fig. 2 zeigt einen Abtastmodul 20, bei dem die Erfindung verwirklicht ist. In dem Abtastmodul 20 ist ein Einstrahlungskopf 9 derartig angeordnet, daß seine Position bezüglich der Probe 15 sowohl longitudinal (senkrecht zur Grenzfläche 17, Pfeil 24) als auch lateral (parallel zur Grenzfläche 17, Pfeil 25) beweglich ist. Die hierfür erforderlichen Positionierungsmittel 19, 27 sind in der Figur nur andeutungsweise dargestellt. Sie können in bekannter Weise, beispielsweise mit einem elektromagnetischen Antrieb, realisiert sein. Mit einer eindimensionalen lateralen Abtastung kann ein Schnittbild der Probe entlang der lateralen Abtastlinie erzeugt werden. Wenn die Positionierungsmittel 27 für eine zweidimensionale Bewegung parallel zu der Grenzfläche 17 ausgebildet sind, können Informationen über das Teilvolumen der Probe unterhalb der abgetasteten Fläche gewonnen werden.

In dem Einstrahlungskopf 9 befindet sich ein optischer Chip 28 mit Wellenleitern 29, die den größten Teil einer Interferometer-Anordnung 2 bilden. Teil dieser Interferometer-Anordnung sind auch Lichtquellen 6 und Detektoren 13, die so angeordnet sind, daß das Licht in die Wellenleiterbahnen 29 aus- und eingestrahlt bzw. aus diesen austretendes Licht detektiert wird. Statt der hier dargestellten direkten Ein- und Ausstrahlung des Lichts ist vielfach eine Übertragung von der jeweiligen Lichtquelle bzw. zu dem jeweiligen Detektor über Lichtleitfasern ("Faserankopplung") vorteilhaft.

Da die Abtastbewegung möglichst schnell sein sollte, können die damit verbundenen Massenbeschleunigungen zu störenden Vibrationen führen. Um dies zu verhindern, kann es zweckmäßig sein, innerhalb des Abtastmoduls 20 ein (nicht dargestelltes) Gegengewicht vorzusehen, dessen Masse mit der bewegten Masse des optischen Chip 28 übereinstimmt und das gegenläufig zu dem optischen Chip bewegt wird.

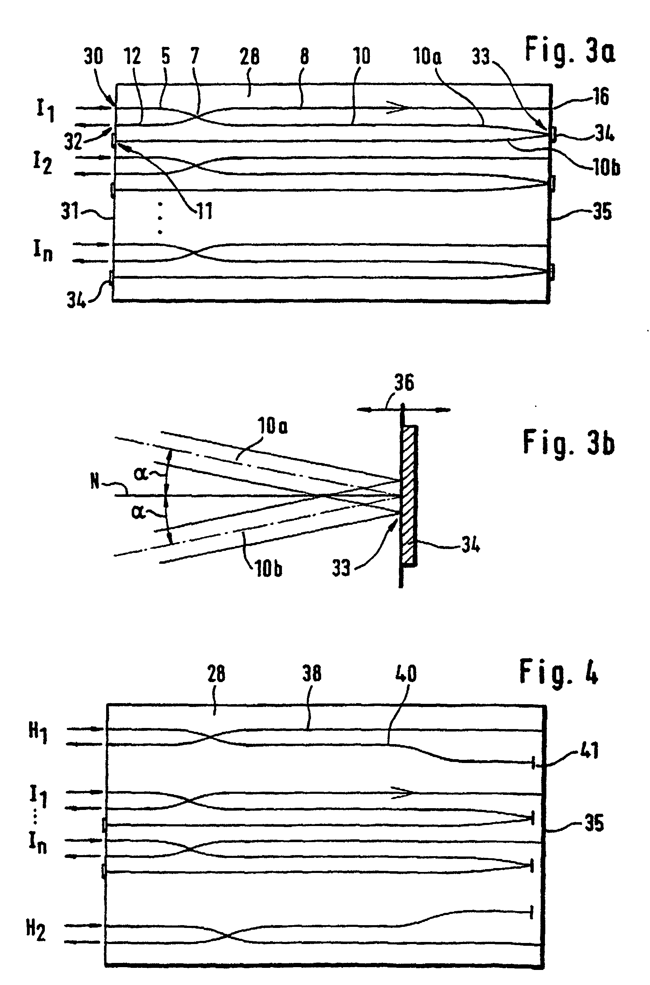

Fig. 3a zeigt den Wellenleiterplan eines optischen Chips 28 bei dem der größte Teil der Interferometer-Anordnung, insbesondere der optische Koppler 7 und der Referenzarm 10 gemeinsam in dem Chip integriert sind. Der in dem Chip 28 integrierte Teil einer Interferometer-Anordnung wird als "Interferometermodul" bezeichnet. Bei der dargestellten bevorzugten Ausführungsform sind in dem gleichen Chip mehrere parallele Interferometermodule $I_1 ... I_n$ vorgesehen, um die Probe mehrkanalig zu untersuchen, wobei das Meßlicht an mehreren verschiedenen Eintrittsorten $E_1 ... E_n$ eintritt und an mehreren Reflexionsorten $R_1 ... R_n$ reflektiert wird (Fig. 2). Die Interferometermodule I haben jeweils eine Lichteinkopplungsstelle 30, an der Licht von einer nicht dargestellten Lichtquelle - zweckmäßigerweise mittels einer Lichtleitfaser transportiert - eingekoppelt wird und eine an der gleichen Stirnfläche 31 des optischen Chip 28 vorgesehene Auskopplungsstelle 32, in der das in dem Detektorarm 12 transportierte Licht zu einem nicht dargestellten Detektor ausgekoppelt wird.

Der Referenzarm 10 muß länger sein als der in dem optischen Chip integrierte Teil des Probenarms 8 zwischen dem optischen Koppler 7 und der Lichtaustrittsöffnung 16. Dies wird dadurch erreicht, daß zusätzlich zu dem am Ende des Referenzarms 10 vorgesehenen Referenzreflektor 11 ein Umlenkreflektor 33 in dem Referenzarm vorgesehen ist, durch den das Referenzlicht innerhalb des optischen Chips 28 in die Gegenrichtung umgelenkt wird. Bei der in Fig. 3a dargestellten Ausführungsform sind beide Reflektoren 11, 33 in Form von verspiegelten Endflächen 34 auf polierten Stirnflächen 31, 35 des Chips 28 realisiert.

Fig. 3b zeigt in Form einer vergrößerten Ausschnittsdarstellung, daß bei dieser Ausführungsform die Überkopplung zwischen den Lichtwellenleitern 10a und 10b dadurch erreicht wird, daß diese unter einem spitzen Winkel auf den Umlenkreflektor 33 auftreffen. Der Winkel $\alpha$ zu der Flächennormalen N ist für beide Wellenleiter gleich groß und sollte mindestens etwa 5° betragen, um eine hinreichend vollständige Überkopplung zu gewährleisten. Die Längsposition des Umlenkreflektors 33 in Richtung des Doppelpfeils 36 muß sich möglichst genau am Kreuzungspunkt der Lichtwellenleiter befinden. Die erforderliche Präzision dieser Positionierung hängt davon ab, wie hoch im Einzelfall die Anforderungen an die Vollständigkeit der Überkopplung sind bzw. inwieweit geringfügige Intensitätsverluste in Kauf genommen werden können. Als Richtwert kann eine erforderliche Präzision von +/- 10 μm angegeben werden.

Die Zahl der Interferenz-Anordnungen $I_1...I_n$ und der laterale Abstand der Lichtaustrittsöffnungen 16 kann entsprechend den jeweiligen Anforderungen gewählt werden, wobei ein besonderer Vorteil der Erfindung darin zu sehen ist, daß ein sehr enger Abstand der Lichtaustrittsöffnungen 16 und folglich der Reflexionspunkte $R_1...R_n$ in der Probe 15 möglich ist. Im Rahmen des LCI-Imaging ist es dadurch möglich, eine gegebene Untersuchungsfläche (FOV, "Field of View") mit geringer oder sogar ganz ohne laterale mechanische Bewegung zu untersuchen. Beispielsweise resultiert bei einem FOV von 1 x 1 mm$^2$ mit 16 Interferometer-Modulen ein Abstand der Lichtaustrittsöffnungen 16 auf der probenseitigen Stirnfläche 35 des optischen Chips 28 von 62,5 μm. Demzufolge kann eine optische Auflösung, die diesem Abstand entspricht, ohne mechanische Bewegung erreicht werden. Da bei üblichen Lichtleitfaser-Durchmessern von etwa 250 μm die Abstände zwischen den Einkopplungsstellen 30 und den Auskopplungsstellen 32 auf der einstrahlungsseitigen Stirnfläche 31 des optischen Chips größer sein müssen, ist eine Wellenleiterbahnverdichtung innerhalb des optischen Chips 28 notwendig. Durch entsprechende Krümmung der Bahnen ist es dabei ohne weiteres möglich, gleiche Längen der einander entsprechenden Wellenleiterbahnen in den Interferometermodulen $I_1...I_n$ zu gewährleisten.

Eine noch höhere Auflösung kann dadurch realisiert werden, daß der optische Chip (wie in Fig. 2 dargestellt) lateral verschoben wird. Auch dabei ist es sehr vorteilhaft, wenn nur eine geringe laterale Verschiebung (in dem gegebenen Beispiel etwa 60 μm) erforderlich ist. Diese kann mit hoher Zuverlässigkeit und Geschwindigkeit mit speziellen Piezoelementen ("stakked piezo elements") realisiert werden.

Allgemein ermöglicht die Erfindung somit eine sehr dichte Anordnung der Austrittsöffnungen 16 mehrerer Interferometer-Anordnungen in einem Einstrahlungskopf 9, wobei das Einsatzgebiet insbesondere bei Abständen der Einstrahlungsöffnungen von weniger als 0,5 mm liegt.

Bei der Herstellung eines optischen Chips gemäß den Figuren 3a und 3b ist es wie erwähnt erforderlich, den Referenzreflektor 33 exakt an dem Kreuzungspunkt der Lichtwellenleiter 10a und 10b zu positionieren. Dies erfordert ein sehr exaktes Ablängen der Stirnflächen 31 und 35 des optischen Chips 28.

In Fig. 4 ist eine Möglichkeit dargestellt, dieses exakte Ablängen zu ermöglichen. Der optische Chip 28 enthält zusätzlich zu den Interferometermodulen $I_1...I_n$ (die in gleicher Weise wie bei Fig.3 ausgebildet sind) zwei Hilfs-Interferometermodule $H_1$, $H_2$. Diese werden zum Ablängen in folgender Weise benutzt.

Um die Interferenzbedingung in den Hilfsinterferometern zu erfüllen, muß die Länge ihres Probenarms 38 mit der Länge ihres Referenzarms 40 übereinstimmen. Der Referenzarm 40 hat durch einen gebogenen Verlauf eine etwas größere Länge als der Probenarm 38. An seinem Ende befindet sich ein Element mit einer unstetigen Brechungsindexänderung, das einen (schwachen) Reflektor 41 an einer Position bildet, die exakt der gewünschten Sollposition der Stirnfläche 35 entspricht. Dabei genügt eine sehr geringe Brechungsindexerhöhung, um ein Interferenzsignal zu erzeugen. Wenn nun im Herstellungsprozeß die Stirnfläche 35 langsam abgeschliffen wird, ergibt sich ein Peak des Interferenzsignals, wenn die Länge des Probenarms 38 mit der Länge des Referenzsignals 40 übereinstimmt. Damit kann die Sollposition der Stirnfläche 35 sehr genau eingehalten werden. Das zweite Hilfsinterferometer $H_2$ erlaubt eine exakte Korrektur der Winkellage der Stirnfläche 35.

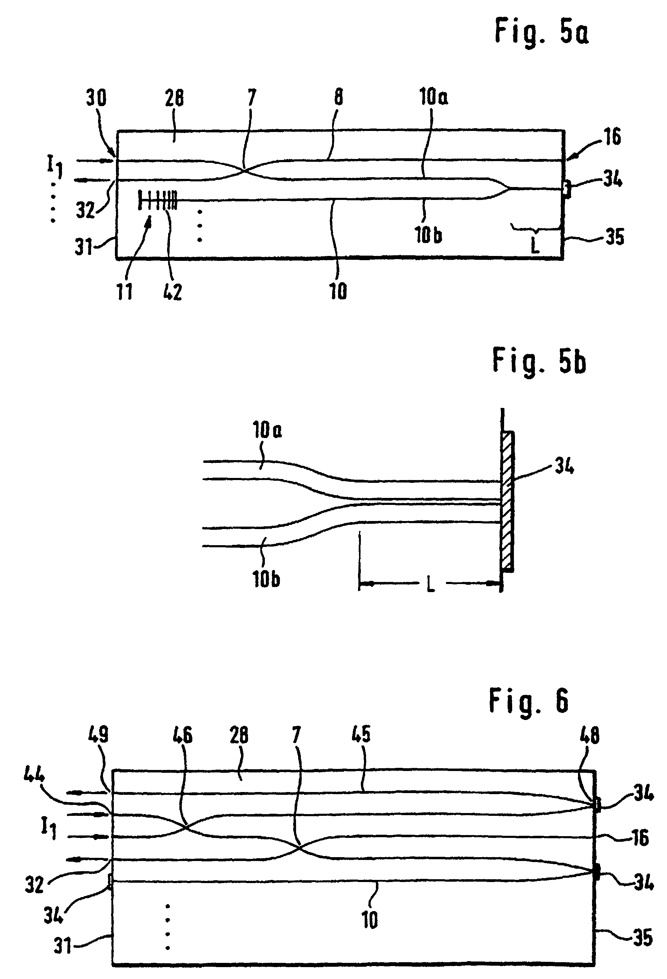

Fig. 5a zeigt einen Ausschnitt aus dem Wellenleiterplan einer alternativen Ausführungsform eines optischen Chips 28, wobei in diesem Fall nur ein einziger Interferometermodul $I_1$ dargestellt ist, vorzugsweise jedoch ebenso wie bei Fig. 3a weitere Interferometermodule in dem gleichen optischen Chip 28 integriert sind.

Bei dieser Ausführungsform wird eine hinreichend vollständige Überkopplung zwischen den Lichtwellenleitern 10a und 10b dadurch erreicht, daß diese - wie in Fig. 5b deutlicher zu erkennen ist - vor dem Umlenkreflektor über eine Kopplungslänge L in einer Lichtkoppleranordnung parallel verlaufen. Der Abstand ist so nah (Richtwert ca. 15 μm), daß zwischen ihnen eine Kopplung über evanescente Wellen stattfindet. Die Kopplungslänge L ist so bemessen, daß sich Überkopplung ergibt.

Wie in dem oben angegebenen Zitat 9) beschrieben wird, wird bei bestimmten Kopplungslängen $L_c$ eine vollständige Überkopplung erreicht, während bei dazwischenliegenden Längen mehr oder weniger große Lichtanteile in dem gleichen Lichtwellenleiter weiterlaufen. Für die Kopplungslängen $L_c$ wird folgende Formel (auf Seite 149, unten) angegeben:

$$L_c = \frac{1}{Kappa}\ (2\ Ny\ -1)\ \pi/2$$

Darin ist Kappa der Kopplungsfaktor, Ny ist eine ganze Zahl. Die kürzeste Länge für vollständige Überkopplung ist

$$L_c = \frac{\pi}{2\ Kappa}$$

Die erfindungsgemäße Anordnung unterscheidet sich von derjenigen der Literaturstelle dadurch, daß der zu den beiden Lichtwellenleitern senkrecht verlaufende Umlenkreflektor das Licht in diese zurückreflektiert. Für vollständige Überkopplung muß die Kopplungslänge L, über die die Lichtwellenleiter parallel verlaufen, den halben Wert von $L_c$ haben:

$$L = L_c/2.$$

In der Praxis wird die Kopplungslänge L experimentell auf maximale Überkopplung eingestellt. Ein wesentlicher Vorteil dieser Konstruktion besteht darin, daß der Grad der Überkopplung sich in Abhängigkeit von der Position des Umkehrreflektors nur relativ wenig ändert und deswegen die Anforderungen an die exakte Positionierung des Umkehrspiegels relativ gering sind.

Eine weitere Besonderheit der in Fig. 5a dargestellten Ausführungsform besteht darin, daß als Referenzreflektor 11 ein Chirped Grating 42 verwendet wird. Ein Chirped Grating ist eine Gitterstruktur mit einer kontinuierlich zu- bzw. abnehmenden Gitterkonstante. Damit ist die Eigenschaft verbunden, daß an den Abschnitten mit kürzerer Gitterkonstante Lichtanteile mit kürzerer Wellenlänge reflektiert werden und an den Abschnitten mit längerer Gitterkonstante das längerwellige Licht reflektiert wird. Die Reflexion an einem Chirp Grating führt deshalb dazu, daß unterschiedliche Teile des (wegen der Niederkohärenz notwendigerweise polychromatischen) Lichts an unterschiedlichen Stellen des Gitters reflektiert werden. Bei der dargestellten Ausführungsform werden beispielsweise an dem Gitter 42 die kurzwelligen Anteile des Lichts früher reflektiert (in Richtung des einfallenden Lichts nimmt die Gitterkonstante zu).

Dabei kann man von der Eigenschafts eines Chirped Grating Gebrauch machen, daß es sich zur Kompensation der Lichtwellen-Dispersion eignet. Die Lichtwellen-Dispersion stellt bei einer hochauflösenden LCI-Anordnung ein Problem dar, weil das Meßlicht und das Referenzlicht teilweise durch unterschiedliche Medien transportiert werden, in denen die Abhängigkeit der Lichtgeschwindigkeit und damit des Brechungsindex von der Wellenlänge (Dispersion) unterschiedlich ist, d. h. die optischen Wege (Produkt des geometrischen Weges und des Brechungsindex) für unterschiedliche Wellenlängen unterschiedlich lang sind. Dies führt zu einer Verschmierung des Interferenzsignals und damit zu einer schlechteren Auflösung in longitudinaler Richtung. Bei Verwendung eines Chirp Gratings kann durch entsprechende Wahl der Chirp-Raten des Gitters 42 erreicht werden, daß sämtliche Lichtanteile unabhängig von ihrer Wellenlänge mit guter Nährung die gleiche optische Weglänge wie das Meßlicht zurücklegen und dadurch die Schärfe der Auflösung optimiert wird.

Unabhängig von der Verwendung eines Chirped Gratings kann es zweckmäßig sein, den Referenzreflektor nicht an einer Endfläche des optischen Chip (wie bei Figur 3a), sondern (beispielsweise als durch Ionenätzen erzeugte Struktur) an anderer Stelle des optischen Chip vorzusehen.

Der in Fig. 6 dargestellte optische Chip enthält eine modifizierte Interferometer-Anordnung, bei der zusätzlich ein Kompensationslichtweg 45 vorgesehen ist, um relative große Gleichspannungsanteile des Detektorsignals zu unterdrücken. Der Kompensationslichtweg 45 führt von einem zusätzlichen optischen Koppler 46 über einen Reflektor 48 zu einer weiteren Auskopplungsstelle 49 an der Stirnfläche 31. Bei der hier dargestellten Ausführungsform ist außerdem eine zusätzliche Einkopplungsstelle 44 zur Einkopplung des Lichts einer weiteren Lichtquelle, beispielsweise mit einer anderen Wellenlänge, vorgesehen.

Das an den Auskopplungsstellen 49 und 32 austretende Licht wird von zwei nicht dargestellten Detektoren detektiert, die in einer Kompensationsschaltung geschaltet sind. Diese Kompensationstechnik ist bekannt und wird beispielsweise in der WO 92/19930 beschrieben. Fig. 6 zeigt, in welcher Weise man im Rahmen der vorliegenden Erfindung den Kompensationslichtweg in den gleichen optischen Chip integrieren kann, in dem auch der Referenzlichtweg verläuft.

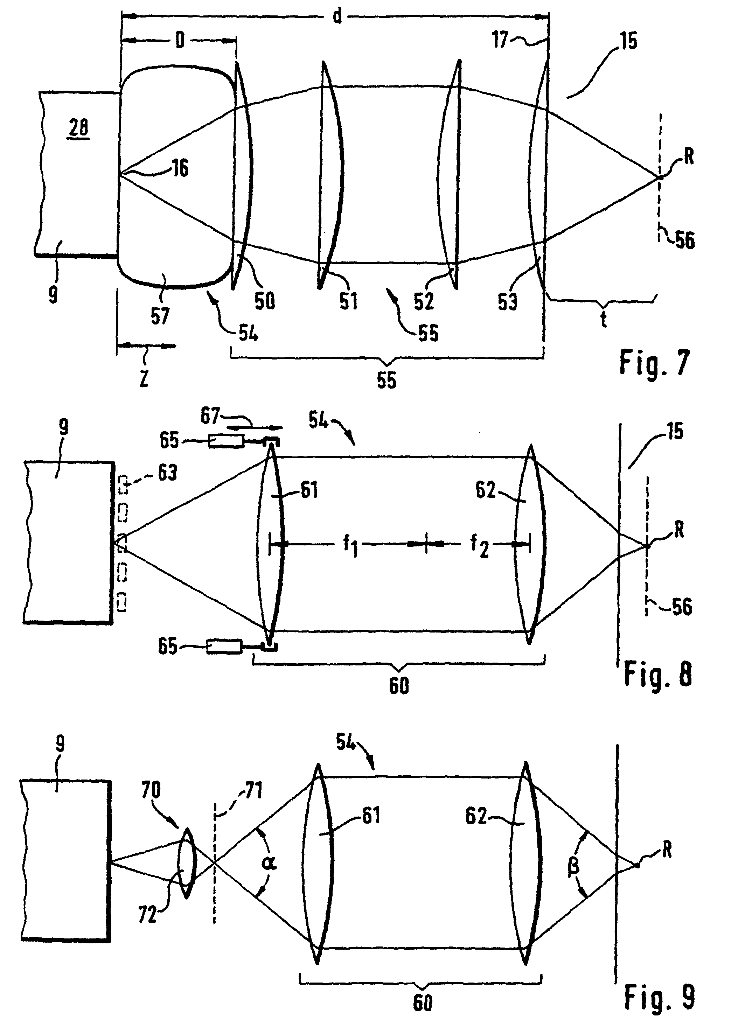

Fig. 7 bis 9 zeigen unterschiedliche Ausführungsformen fokussierender optischer Systeme, welche für LCI-Reflektometer geeignet sind, bei denen die Tiefenabtastung durch Variation des Abstands d zwischen dem Einstrahlungskopf 9 und der Grenzfläche 17 erfolgt. Dabei sind jeweils Fokuskorrekturmittel 54 vorgesehen, durch die gewährleistet wird, daß sich die Fokustiefe in der Probe 15 bei Veränderungen der LCI-Meßtiefe t stets gleichförmig mit t ändert. Dadurch wird an jedem Punkt der Tiefenabtastung eine scharfe Fokussierung erreicht.

Fig. 7 zeigt einen Einstrahlungskopf 9, welcher vorzugsweise einen optischen Chip 28 gemäß einer der Figuren 2 bis 6 enthält. Durch ein mehrere Linsen 50 bis 53 umfassendes optisches System 55 wird jeder Lichtaustrittspunkt 16 des Einstrahlungskopfes 9 in eine Fokusebene 56 abgebildet. Um eine optimale optische Auflösung zu gewährleisten, sollte der Reflexionspunkt R, auf den die LCI-Abtastung eingestellt ist, im gesamten Abtastbereich in der Fokusebene 56 des optischen Systems 55 liegen. Ohne zusätzliche Fokuskorrekturmittel ist dies nicht der Fall, weil (bei einem Brechungsindex N > 1, von dem in der Praxis stets auszugehen ist) eine Verschiebung des Einstrahlungskopfs 9 um einen Betrag z zu unterschiedlichen Verschiebungen der Fokusebene 56 und des Reflexionspunkts R (mit anderen Worten zu unterschiedlichen Änderungen der Fokustiefe und der LCI-Meßtiefe) führt, wobei sich die LCI-Meßtiefe um weniger als z, die Fokustiefe jedoch um mehr als z ändert.

Bei der in Fig. 7 dargestellten Ausführungsform wird die Fokuskorrektur durch eine Flüssigkeitsgefüllte, transparente Blase 57 erreicht, die in dem Lichtweg des Meßlichts zwischen dem Einstrahlungskopf 9 und der Probe 15 derartig angeordnet ist, daß sich ihre Dicke verringert, wenn der Einstrahlungskopf in Richtung auf die Probe bewegt wird. Die Flüssigkeit in der Blase 57 sollte dabei einen Brechungsindex haben, der dem Brechungsindex der Probe 15 möglichst ähnlich ist. Bei einer Bewegung des Einstrahlungskopfs 9 um einen Weg z wird die Dicke D der Blase 57 um den gleichen Betrag verringert, um den in der Probe sowohl die Fokusebene 56 als auch der LCI-Reflexionspunkt R nach rechts verschoben werden.

Fig. 8 zeigt eine besonders bevorzugte Ausführungsform, bei der die Fokuskorrektur mit rein optischen Mitteln erreicht wird. Das optische Fokuskorrektursystem 60 weist dabei zwei Objektive 61, 62 auf, deren Abstand so groß ist wie die Summe ihrer Brennweiten $f_1$ und $f_2$. Eine solche Anordnung wird in Keppler-Fernrohren verwendet und hier als Keppler-System bezeichnet. Die Objektive 61 und 62 können einfache Linsen oder mehrlinsige Systeme sein.

Die Fokuskorrektur ergibt sich dabei, wenn die Brennweiten $f_1$ und $f_2$ der Objektive 61 und 62 unter Berücksichtigung des Brechungsindex N in der Probe gemäß der Formel $f_2/f_1 = 1/N$ gewählt sind. Diese abbildungsgeometrischen Bedingungen führen zu einer Korrektur in Tiefenrichtung um einen Faktor $1/N^2$. Dadurch führt eine Verschiebung des Einstrahlungskopfs 9 um z nicht mehr zu einer Streckung in der Probe um einen Faktor N, sondern um eine Verkürzung um den Faktor $1/N^2 * N = 1/N$. Infolgedessen ändert sich die Fokustiefe gleichförmig mit der LCI-Meßtiefe, die sich ebenfalls um 1/N verkürzt.

Bei einer derartigen Ausführungsform kann eine zusätzliche Verbesserung der Fokusierung dadurch erreicht werden, daß eines der Objektive des Keppler-Systems mit Hilfe eines Positionierantriebs 65 (geeignet ist beispielsweise ein Piezo-Antrieb) in sehr geringem Ausmaß (beispielsweise um bis zu 20 μm) in Längsrichtung (Doppelpfeil 67) verstellbar ist. Dadurch ist es möglich, bei der Fokusierung die Tatsache zu berücksichtigen, daß der Brechungsindex in unterschiedlichen Hautschichten variiert und deswegen der mittlere Brechungsindex bei der Änderung der LCI-Meßtiefe t nicht konstant ist. Durch die Verstellung einer Linse wird der Fokus jeweils entsprechend nachgesteuert.

Bei den Figuren 7 und 8 ist das optische System 55 bzw. 60 nur einmal für sämtliche Interferometermodule vorhanden, d.h. es bildet sämtliche Lichtaustrittsöffnungen des Einstrahlungskopfs 9 in die Ebene 56 ab. Der Übersichtlichkeit halber ist nur ein Strahlengang dargestellt.

Um Korrekturfehler der verhältnismäßig großen Linsen der optischen Systeme 55 und 60 zu kompensieren, kann es vorteilhaft sein, vor den Lichtaustrittsöffnungen 16 jeweils individuelle kleine Linsen 63 - wie in Fig. 8 gestrichelt dargestellt - derart anzuordnen, daß Abbildungsverzerrungen der großen Linsen kompensiert werden.

Die Ausführungsform gemäß Fig. 8 legt die Relation der Brennweiten der beiden Objektive 61 und 62 und somit den Vergrößerungsmaßstab der Abbildung fest. Daraus ergibt sich, daß die optische Apertur auf der Probenseite bei gegebener relativ kleiner Apertur auf der Einstrahlungsseite des optischen Systems nicht ohne weiteres vergrößert werden kann. Eine große optische Apertur auf der Probenseite kann jedoch gewünscht sein, insbesondere um die optische Auflösung der Tiefenabtastung zu verbessern.

Um dies zu erreichen, kann es zweckmäßig sein, zusätzlich zu dem optischen System 60 gemäß Fig. 8 ein vorgeschaltetes, gemeinsam mit dem Einstrahlungskopf 9 bewegliches in Figur 9 dargestelltes optisches Abbildungssystem 70 vorzusehen, das in der Gegenstandsebene des Keppler-Systems 60 (d.h. in der einstrahlungsseitigen Brennebene des Objektivs 61) ein verkleinertes Bild der Lichtaustrittsöffnung 16 und des Einstrahlungskopfs 9 erzeugt. Dadurch wird der Aperturwinkel α auf der Einstrahlungsseite des Fokuskorrektursystems 60 und somit auch der Aperturwinkel β auf dessen Probenseite vergrößert.

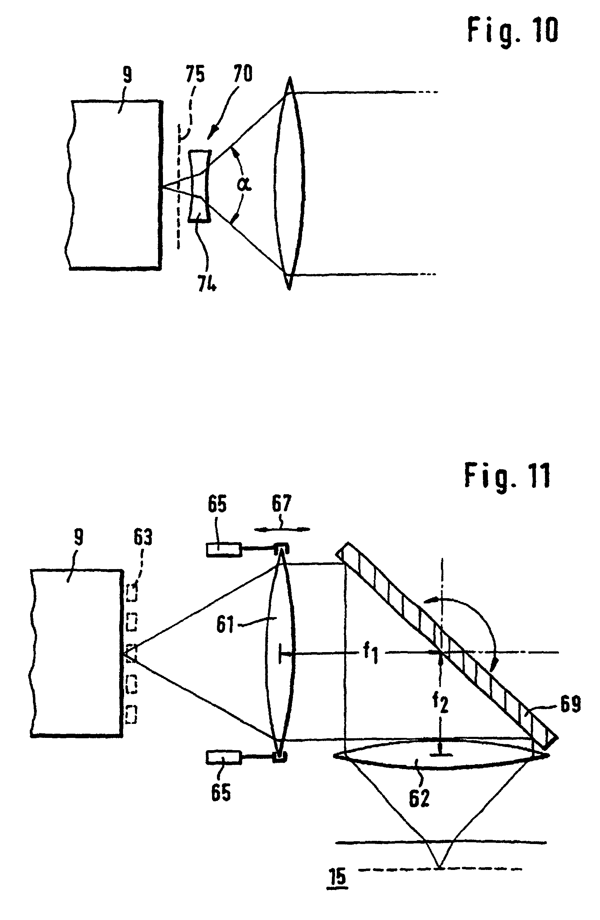

Die gleiche Wirkung des zusätzlichen optischen Abbildungssystems 70 kann - wie in Fig. 10 dargestellt - statt durch eine Konvexlinse 72 auch durch eine Konkavlinse 74 erreicht werden. In diesem Fall wird statt des in Fig. 9 dargestellten reellen Bilds in der Ebene 71 ein verkleinertes virtuelles Bild in einer Ebene 75 auf der dem Einstrahlungskopf zugewandten Seite der Konkavlinse erzeugt. Die Funktion der Linsen 72,74 kann auch von Mikrolinsen, die (wie die Linsen 63 bei Figur 8) jeweils einer Interferometeranordnung zugeordnet sind, erfüllt werden.

Die optischen Systeme 55 und 60 sind ortsfest in einer bestimmten Position an der Grenzfläche 17 der Probe 15 angeordnet. Für die Tiefenabtastung muß nur der Einstrahlungskopf 9 bewegt werden. Generell sollte das zur Fokussierung verwendete optische System bei der Erfindung im wesentlichen ortsfest sein, um möglichst geringe bewegliche Massen aufzuweisen. Dies schließt selbstverständlich eine Mikroverstellung von Linsen, wie beispielsweise durch den Positionierantrieb 65 in Fig. 8 nicht aus, da eine solche Verstellung (um maximal 0,02 mm), beispielsweise mit piezoelektrischen Elementen, schnell und präzise bewirkt werden kann.

"Ortsfest" in diesem Sinne sollte insbesondere das eigentliche Fokuskorrektursystem, also im Fall der Fig. 8 bis 10 das Keppler-System 60, sein. Die Bewegung der gegebenenfalls vorgeschalteten mit dem Einstrahlungskopf 9 gemeinsam beweglichen Korrekturlinsen 63,72,74 kann wesentlich leichter realisiert werden, da diese Linsen verhältnismäßig klein sind und eine geringe Masse haben. Der Massenanteil der gemeinsam mit dem Einstrahlungskopf 9 beweglichen optischen Elemente des Gesamt-Abbildungssystems sollte jedoch möglichst klein (kleiner als 20 %, bevorzugt kleiner als 5 %) sein.

Die Ausführungsform gemäß den Figuren 8 bis 10 erlaubt eine besonders einfache Realisierung der für ein OCT-System erforderlichen lateralen Abtastung. In Fig. 11 ist dargestellt, daß ein Schwenkspiegel 69 zwischen den Objektiven 61 und 62 derart angeordnet sein kann, daß mit einer sehr kleinen Schwenkbewegung die erforderliche laterale Verschiebung der Abbildung und damit der optischen Abtastung erreicht wird.

**Patentansprüche**

1. Niederkohärenz-interferometrisches Gerät zur Untersuchung einer Probe (15), insbesondere zur mehrdimensionalen Bilddarstellung, mit einer Interometer-Anordnung (2), welche eine niederkohärente Lichtquelle, einen Einstrahlungskopf (9) mit einer Lichtaustrittsöffnung (16) zum Einstrahlen von Licht in die Probe, einen optischen Koppler (7), einen Referenzreflektor (11) und einen Detektor (13) umfaßt,

   wobei

   die Lichtwege zwischen den Elementen der Interometer-Anordnung (2) Interferometerarme bilden, nämlich einen Lichtquellenarm (5) zwischen der Lichtquelle (6) und dem optischen Koppler (7), einen Probenarm (8) zwischen dem optischen Koppler (7) und der Probe, einen Referenzarm (10) zwischen dem optischen Koppler (7) und dem Referenzreflektor (11) und einen Detektorarm (12) zwischen dem optischen Koppler (7) und dem Detektor Meßlicht über den Lichtquellenarm (5) und den Probenarm (8) durch eine die Probe (15) begrenzende Grenzfläche in die Probe (15) eingestrahlt und aus der Probe (15) reflektiertes Licht über den Probenarm (18) und den Detektorarm (12) dem Detektor (13) zugeführt wird,

   Referenzlicht von dem optischen Koppler (7) zu dem Referenzreflektor (11) und von dort über den Referenzarm (10) und den Detektorarm (11) zu dem Detektor (13) geleitet wird,

   das Meßlicht und das Referenzlicht so zusammengeführt werden, daß sie an der gleichen Stelle auf den Detektor (13) auftreffen und ein Interferenzsignal erzeugen, wobei aus einer LCI-Meßtiefe (t) unterhalb der Grenzfläche (17) der Probe (15) reflektiertes Licht selektiv erfaßt wird, und

der optische Koppler (7) und der Referenzarm (10) der Interferometer-Anordnung (2) gemeinsam in einem optischen Chip (28) integriert sind, wobei der Referenzarm (10) zusätzlich zu dem Referenzreflektor (11) einen Umlenkreflektor (33) aufweist, durch den das Referenzlicht von einem ersten, eine erste Teilstrecke des Referenzarms (10) bildenden Lichtwellenleiter (10a) in einen zweiten, eine zweite Teilstrecke des Referenzarms (10) bildenden Lichtwellenleiter (10b) reflektiert und dadurch eine ausreichende Länge des Referenzlichtweges in dem optischen Chip (28) erreicht wird,

**dadurch gekennzeichnet, daß**

der Umlenkreflektor (33) an einer Endfläche (35) des optischen Chip (28) derartig ausgebildet ist, daß das Referenzlicht zwischen den beiden Lichtwellenleitern (10a,10b) übergekoppelt wird.

2. Gerät nach Anspruch 1, **dadurch gekennzeichnet, daß** der Umlenkreflektor (33) von einer verspiegelten Endfläche (34) des optischen Chips gebildet wird.

3. Gerät nach einem der Ansprüche 1 oder 2, **dadurch gekennzeichnet, daß** zur Überkopplung des Referenzlichts der erste Lichtwellenleiter (10a) und der zweite Lichtwellenleiter (10b) unter einem spitzen Winkel $\alpha$ auf den Umlenkreflektor (33) auftreffen.

4. Gerät nach einem der Ansprüche 1 oder 2, **dadurch gekennzeichnet, daß** zur Überkopplung des Referenzlichts der erste Lichtwellenleiter (10a) und der zweite Lichtwellenleiter (10b) unmittelbar vor dem Umlenkreflektor (33) über eine Kopplungslänge L in einer Lichtkoppleranordnung parallel verlaufen, wobei die Kopplungslänge L so bemessen ist, daß Überkopplung stattfindet.

5. Gerät nach einem der vorhergehenden Ansprüche, **dadurch gekennzeichnet, daß** der optische Chip (28) mehrere parallel angeordnete Interferometermodule ($I_1...I_n$) enthält, um die Probe (15) mehrkanalig zu untersuchen, wobei das Meßlicht an mehreren verschiedenen Eintrittsorten ($E_1...E_n$) der Grenzfläche (17) in die Probe (15) eingestrahlt wird.

6. Gerät nach einem der vorhergehenden Ansprüche, **dadurch gekennzeichnet, daß** der optische Chip (28) in dem Referenzarm (10) ein Chirped Grating (42) enthält.

7. Gerät nach einem der vorhergehenden Ansprüche, **dadurch gekennzeichnet, daß** der optische Chip einen Interferometermodul mit einem zusätzlichen Kompensationslichtweg (45) enthält, in den ein Teil des Lichts der Lichtquelle (6) mittels eines zusätzlichen optischen Kopplers (46) abgezweigt und einem zusätzlichen Lichtempfänger zur Kompensation von nicht interferenzfähigen Lichtanteilen zugeführt wird.

8.  Gerät nach einem der vorhergehenden Ansprüche, **dadurch gekennzeichnet, daß** zur Lateralabtastung Positionierungsmittel (27) vorgesehen sind, durch die die Position, an der das Meßlicht durch die Grenzfläche (17) in die Probe (15) eingestrahlt wird, in mindestens einer Raumrichtung parallel zu der Grenzfläche (17) veränderbar ist.

9.  Gerät nach einer der vorhergehenden Ansprüche, **dadurch gekennzeichnet, daß** zur Tiefenabtastung Positionierungsmittel (19) vorgesehen sind, durch die der Abstand (d) des Einstrahlungskopfes (9) von der Grenzfläche (17) veränderbar ist.

10. Gerät nach einem der vorhergehenden Ansprüche, **dadurch gekennzeichnet, daß** zur Tiefenabtastung der Probe Positionierungsmittel (19) vorgesehen sind, durch die der Abstand (d) des Einstrahlungskopfes (9) von der Grenzfläche (17) ver-änderbar ist, zwischen dem Einstrahlungskopf (9) und der Grenzfläche (17) ein optisches System vorgesehen ist, durch das das in die Probe (15) eingestrahlte Licht in eine Fokusebene (56) in einer Fokustiefe fokussiert wird, deren Abstand von der Grenzfläche mit der LCI-Meßtiefe (t) übereinstimmt und das optische System Fokuskorrekturmittel (54) aufweist, durch die die Fokustiefe bei der Tiefenabtastung derartig gleichförmig verändert wird, daß die Fokustiefe und die LCI-Meßtiefe in dem Tiefenabtastbereich des Systems übereinstimmen.

11. Gerät nach Anspruch 10, **dadurch gekennzeichnet, daß** die Fokuskorrekturmittel (54) eine bewegliche, flüssigkeitsgefüllte, transparente Blase einschließen, die in dem Lichtweg des Meßlichtes zwischen dem Einstrahlungskopf (9) und der Probe (15) derartig angeordnet ist, daß sich ihre Dicke verringert, wenn der Einstrahlungskopf (9) in Richtung auf die Probe (15) bewegt wird.

12. Gerät nach einem der Ansprüche 10 oder 11, **dadurch gekennzeichnet, daß** die Fokuskorrekturmittel (54) ein Keppler-System (69) mit zwei Objektiven (61,62) einschließt, deren Abstand der Summe ihrer Brennweiten entspricht und für deren Brennweiten $f_1$ und $f_2$ gilt:

$$f_2/f_1 = 1/N,$$

wobei N etwa dem mittleren Brechungsindex der Probe (15) entspricht.

13. Gerät nach einem der Ansprüche 10 bis 12, **dadurch gekennzeichnet, daß** das optische System ein ortsfestes Linsensystem einschließt.

## Claims

1.  Low coherence interferometer apparatus for investigation of a sample (15), in particular for purposes of multi-dimensional imaging, having an interferometer configuration (2) comprising a low coherence light source, a probe head (9) having a light exit opening (16) for irradiating light into the sample, an optical coupler (7), a reference reflector (11) and a detector (13) wherein
the optical paths between the elements of the interferometer configuration (2) form interferometer arms, namely a light source arm (5) between the light source (6) and the optical coupler (7), a sample arm (8) between the optical coupler (7) and the sample, a reference arm (10) between the optical coupler (7) and the reference reflector (11), and a detector arm (12) between the optical coupler (7) and the detector measuring light is irradiated into the sample (15) via the light source arm (5) and the sample arm (8) and through an interface defining the sample (15) and light reflected from the sample (15) is guided to the detector (13) via the sample arm (18) and the detector arm (12),
reference light is guided from the optical coupler (7) to the reference reflector (11) and therefrom via the reference arm (10) and the detector arm (11) to the detector (13)
the measuring light and the reference light are joined in such a manner that they are both incident on the detector (13) at the same location to produce an interference signal, wherein light reflected at an LCI measuring depth (t) beneath the interface (17) of the sample (15) is selectively detected, and
the optical coupler (7) and the reference arm (10) of the interferometer configuration (2) are commonly integrated in an optical chip (28), wherein the reference arm (10) has, in addition to the reference reflector (11), a deflection reflector (33) by means of which the reference light from a first light guide (10a) forming a first partial path of the reference arm (10) is reflected into a second light guide (10b) forming a second partial path of the reference arm (10) to achieve a sufficient reference light path length in the optical chip (28),
**characterized in that**,
the deflection reflector (33) is formed at an end surface (35) of the optical chip (28) in such a fashion that the reference light is cross-coupled between the two light guides (10a,10b).

**2.** Apparatus according to claim 1, **characterized in that** the deflection reflector (33) is formed by a mirrored end surface (34) of the optical chip.

**3.** Apparatus according to any one of claims 1 or 2, **characterized in that** the first light guide (10a) and the second light guide (10b) are incident on the deflection reflector (33) at an acute angle Â to cross-couple the reference light.

**4.** Apparatus according to any one of claims 1 or 2, **characterized in that** the first light guide (10a) and the second light guide (10b) travel parallel to one another in a light coupling device along a coupling length L directly before the deflection reflector (33), wherein the coupling length L is adapted to effect cross-coupling.

**5.** Apparatus according to any one of the preceding claims, **characterized in that** the optical chip (28) comprises a plurality of parallel disposed interferometer modules ($I_1...I_n$) for multi-channel investigation of the sample (15), wherein the measuring light is irradiated into the sample (15) at a plurality of interface (17) input locations ($E_1...E_n$).

**6.** Apparatus according to any one of the preceding claims, **characterized in that** the optical chip (28) in the reference arm (10) comprises a chirped grating (42).

**7.** Apparatus according to any one of the preceding claims, **characterized in that** the optical chip comprises an interferometer module having an additional compensating optical path (45), a portion of the light from the light source (6) being branched-off by means of an additional optical coupler (46) and guided to an additional light detector for compensation of portions of light which are incapable of interference.

**8.** Apparatus according to any one of the preceding claims, **characterized in that** positioning means (27) are provided for lateral scanning to change the position at which the measuring light is irradiated through the interface (17) into the sample (15) in at least one spatial direction parallel to the interface (17).

**9.** Apparatus according to any one of the preceding claims, **characterized in that** positioning means (19) are provided to change the separation (d) of the probe head (9) from the interface (17) for depth scanning.

**10.** Apparatus according to any one of the preceding claims, **characterized in that** positioning means (19) are provided for depth scanning the sample by changing the separation (d) between the probe head (9) and the interface (17), an optical system is disposed between the probe head (9) and the interface (17) for focussing light irradiated into the sample (15) in a focal plane (56) at a focal depth whose separation from the interface coincides with the LCI measuring depth (t), and the optical system comprises focus correction means (54) for matched changing of the focal depth during the depth scan in such a manner that the focal depth and the LCI measuring depth coincide within the depth scanning range of the system.

**11.** Apparatus according to claim 10, **characterized in that** the focus correction means (54) comprise a movable transparent bubble filled with liquid disposed in the optical path of the measuring light between the probe head (9) and the sample (15) in such a manner that its thickness decreases when the probe head (9) is moved towards the sample (15).

**12.** Apparatus according to any one of claims 10 or 11, **characterized in that** the focus correction means (54) comprise a Keppler system (69) having two lenses (61,62) whose separation corresponds to the sum of their focal lengths with the following relationship obtaining for the focal lengths f1 and f2:

$$f_2/f_1 = 1/N,$$

with N corresponding approximately to the average index of refraction of the sample (15).

**13.** Apparatus according to any one of claims 10 through 12, **characterized in that** the optical system comprises a stationary lens system.

**Revendications**

**1.** Appareil d'interférométrie à faible cohérence pour l'analyse d'un échantillon (15), en particulier pour la représentation en forme d'image multidimensionnelle, dont l'agencement d'interféromètre (2) comprend une source de lumière faiblement cohérente, une tête de radiation incidente (9) comprenant une ouverture de sortie de lumière (16) pour la pénétration de la lumière par radiation incidente dans l'échantillon, un optocoupleur (7), un réflecteur de référence (11) et un détecteur (13), dans lequel les trajets optiques entre les éléments de l'agencement d'interféromètre (2) forment des bras d'interféromètre, plus précisément un bras (5) pour la source lumineuse entre la source lumineuse (6) et l'optocoupleur (7), un bras (8) pour l'échantillon entre l'optocoupleur (7) et l'échantillon, un bras de référence (10) entre l'optocoupleur (7) et le réflecteur de référence (11) et un bras (12) pour le détecteur entre l'optocoupleur (7) et le détecteur,

la lumière de mesure pénètre par radiation incidente dans l'échantillon (15) via le bras (5) pour la source lumineuse et le bras (8) pour l'échantillon à travers une interface délimitant l'échantillon (15) et la lumière réfléchie par l'échantillon (15) est acheminée au détecteur (13) via le bras (8) pour l'échantillon et le bras (12) pour le détecteur,

la lumière de référence provenant de l'optocoupleur (7) est guidée en direction du réflecteur de référence (11) et, à partir de là, via le bras de référence (10) et le bras (11) pour le détecteur, en direction du détecteur (13),

la lumière de mesure et la lumière de référence sont guidées de manière conjointe de telle sorte qu'elles frappent le détecteur (13) au même endroit et génèrent un signal d'interférence, la lumière réfléchie à partir de la profondeur de mesure LCI (t) en dessous de l'interface (17) de l'échantillon (15) étant enregistrée de manière sélective, et

l'optocoupleur (7) et le bras de référence (10) de l'agencement d'interféromètre (2) sont intégrés en commun dans une pastille optique (28), le bras de référence (10) présentant, en plus du réflecteur de référence (11), un réflecteur de déviation (33) à travers lequel la lumière de référence provenant d'un premier câble à fibres optiques (10a) formant un premier tronçon partiel du bras de référence (10) est réfléchie dans un deuxième câble à fibres optiques (10b) formant un deuxième tronçon partiel du bras de référence (10), si bien que l'on obtient une longueur suffisante du trajet de la lumière de référence dans la pastille optique (28),
**caractérisé en ce que**
le réflecteur de déviation (33) est réalisé sur une surface terminale (35) de la pastille optique (28) de telle sorte que la lumière de référence est soumise à un surcouplage entre les deux câbles à fibres optiques (10a, 10b).

2. Appareil selon la revendication 1, **caractérisé en ce que** le réflecteur de déviation (33) est formé par une surface terminale (34) de la pastille optique, sur laquelle a été appliquée une couche réfléchissante.

3. Appareil selon l'une quelconque des revendications 1 ou 2, **caractérisé en ce que**, pour le surcouplage de la lumière de référence, le premier câble à fibres optiques (10a) et le deuxième câble à fibres optiques (10b) frappent le réflecteur de déviation (33) en formant un angle aigu $\alpha$.

4. Appareil selon l'une quelconque des revendications 1 ou 2, **caractérisé en ce que**, pour le surcouplage de la lumière de référence, le premier câble à fibres optiques (10a) et le deuxième câble à fibres optiques (10b) s'étendent en parallèle dans un agencement de couplage de lumière, directement avant le réflecteur de déviation (33) sur une longueur de couplage L, la longueur de couplage L étant mesurée de façon à obtenir un surcouplage.

5. Appareil selon l'une quelconque des revendications précédentes, **caractérisé en ce que** la pastille optique (28) contient plusieurs modules d'interféromètres ($I_1...I_n$) disposés dans un agencement parallèle pour soumettre l'échantillon (15) à une analyse multicanale, la lumière de mesure pénétrant dans l'échantillon (15) par radiation incidente à plusieurs endroits d'entrée différents ($E_1...E_n$) de l'interface (17).

6. Appareil selon l'une quelconque des revendications précédentes, **caractérisé en ce que** la pastille optique (28) contient, dans le bras de référence (10), un réseau de diffraction (42) soumis à une modulation par compression des impulsions.

7. Appareil selon l'une quelconque des revendications précédentes, **caractérisé en ce que** la pastille optique contient un module d'interféromètre comprenant en outre un trajet optique de compensation (45) dans lequel une partie de la lumière de la source lumineuse (6) est soumise à une bifurcation à l'aide d'un optocoupleur supplémentaire (46) et est acheminée à un récepteur optique supplémentaire pour la compensation de fractions de lumière inaptes à l'interférence.

8. Appareil selon l'une quelconque des revendications précédentes, **caractérisé en ce qu'**on prévoit des moyens de positionnement (27) pour le balayage latéral, par lesquels on peut modifier la position à laquelle la lumière de mesure pénètre dans l'échantillon (15) par radiation incidente à travers l'interface (17), dans au moins une direction spatiale, parallèlement à l'interface (17).

9. Appareil selon l'une quelconque des revendications précédentes, **caractérisé en ce qu'**on prévoit des moyens de positionnement (19) pour le balayage en profondeur, par lesquels on peut modifier la distance (d) de la tête de radiation incidente (9) par rapport à l'interface (17).

10. Appareil selon l'une quelconque des revendications précédentes, **caractérisé en ce que**
pour le balayage de l'échantillon en profondeur, on prévoit des moyens de positionnement (19) par lesquels on peut modifier la distance (d) de la tête de radiation incidente (9) par rapport à l'interface (17), entre la tête de radiation incidente (9) et l'interface (17), on prévoit un système optique à travers lequel on peut focaliser dans un plan focal (56) la lumière qui pénètre dans l'échantillon (15) par radiation incidente, dans une profondeur focale dont la distance par rapport à l'interface coïncide avec la profondeur de mesure LCI (t), et

le système optique présente des moyens de correction du foyer (54) par lesquels on modifie de manière uniforme la profondeur focale lors du balayage en profondeur, de telle sorte que la profondeur focale et la profondeur de mesure LCI dans la zone de balayage du système en profondeur coïncident.

**11.** Appareil selon la revendication 10, **caractérisé en ce que** les moyens de correction du foyer (54) englobent une bulle mobile transparente remplie de liquide qui est disposée dans le trajet optique de la lumière de mesure entre la tête de radiation incidente (9) et l'échantillon (15) de telle sorte que son épaisseur diminue lorsque la tête de radiation incidente (9) se déplace en direction de l'échantillon (15).

**12.** Appareil selon l'une quelconque des revendications 10 ou 11, **caractérisé en ce que** le moyen de correction du foyer (54) comprend un système de Keppler (69) comportant deux objectifs (61, 62) dont l'écartement correspond à la somme de leurs distances focales et pour les distances focales $f_1$ et $f_2$ desquelles, on obtient l'équation :

$$f_2/f_1 = 1/N$$

dans laquelle N correspond à l'indice de réfraction moyen de l'échantillon (15).

**13.** Appareil selon l'une quelconque des revendications 10 à 12, **caractérisé en ce que** le système optique comprend un système de lentilles fixé à demeure.

Fig. 1

Fig. 2

Fig. 3a

Fig. 3b

Fig. 4

Fig. 5a

Fig. 5b

Fig. 6

Fig. 7

Fig. 8

Fig. 9

Fig. 10

Fig. 11